# EUROPEAN PATENT SPECIFICATION

(11) **EP 1 786 594 B1**
(45) Date of publication and mention of the grant of the patent: **01.10.2008**
(21) Application number: 05761446.3
(22) Date of filing: 21.07.2005
(51) Int. Cl.: B23Q 17/10, G01D 5/14, G01P 3/48, B23Q 5/20

(54) **MACHINING SPINDLE SPEED PROBES**
GESCHWINDIGKEITSMESSAUFNEHMER FÜR BEARBEITUNGSSPINDEL
CAPTEURS DE VITESSE DE BROCHE D'USINAGE

(30) Priority: 28.07.2004 GB 0416827; 07.12.2004 GB 0426834; 07.12.2004 GB 0426835
(43) Date of publication of application: 23.05.2007
(60) Divisional application: 08004349.0
(73) Proprietor: GSI Group Limited, Swift Valley Rugby Warwickshire CV21 1QN (GB)
(72) Inventor: CLAYTON, Carl 58 Meyrick Court, Dorset BH2 6PB (GB); WARNER, Stephen Robert James, Dorset BH22 9QL (GB)
(74) Representative: Faulkner, Thomas John
(86) International application number: PCT/GB2005/002867
(87) International publication number: WO 2006/010900

(56) References cited:
- EP-A- 0 580 207
- EP-A- 0 836 072
- EP-A- 1 138 435
- EP-A- 1 156 249
- DE-A1- 19 628 566
- US-A- 4 403 179
- US-A- 5 450 009
- US-A- 5 562 418
- US-A- 5 877 408
- US-B1- 6 452 381

## Description

The present invention relates to drilling spindle speed probes and drilling spindles including such speed probes. The present invention is also relevant to other types of machining spindles besides drilling spindles, for example grinding spindles and to speed probes for such machining spindles.

In general drilling spindles comprise a probe for sensing the rotational speed of the shaft carrying the drilling tool as part of a feedback mechanism for controlling the motor driving the shaft. This system allows control of the drilling shaft at the appropriate rates of rotation and can help to improve the efficiency of, and/or protect the integrity of the motor used to drive the shaft.

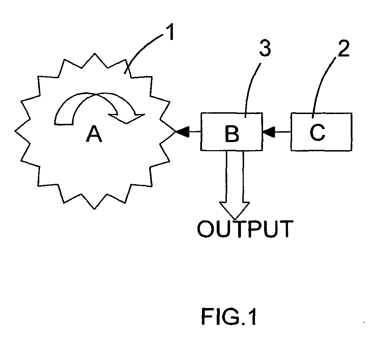

In at least some existing drilling spindles a speed sensor making use of a magneto resistive sensor is used. An outline of such a conventional speed probe is schematically shown in Figure 1. Here the part whose rotational speed is to be sensed is a toothed gear wheel 1 or other notched metallic part. A permanent magnet 2 is provided in the vicinity of the toothed gear wheel 1 and a magnet resistive sensor 3 is disposed between the permanent magnet 2 and the gear wheel 1. Thus, the magneto resistive sensor 3 is located in a magnetic field generated by the permanent magnet 2. In order to obtain an output from the magneto resistive sensor 3 a voltage is applied across it and an output voltage is seen due to the presence of the magnetic field generated by the permanent magnet 2. As the toothed gear wheel 1 rotates, the magnetic field seen by the magneto resistive sensor 3 varies as the teeth or notches in the metallic part serve to modulate the magnetic field. These changes in sensed magnetic field lead to changes in the output of the magneto resistive sensor 3. Thus if these changes are monitored and analysed it is possible to "see" each notch passing the sensor 3 and hence determine the speed of the rotating gear wheel 1.

In such conventional speed probes the output of the magneto resistive sensor 3 is fed directly to the controlling electronic circuitry which is used to control the operation of the motor driving the shaft.

Various problems are associated with such existing speed probes. First of all the locations and spacing of the sensor 3 and magnet 2 relative to the rotating metallic part 1 must be carefully chosen if any useful output is to be obtained. Furthermore, the output impedance of the magneto resistive sensor tends to be very high so that any load placed on the sensor's output will tend to diminish the signal voltage. This means that it can be difficult to obtain a useful signal at the relatively remote location of the controlling circuitry for controlling the motor driving the shaft.

Such speed probes are often provided in a relatively limited space provided in a drilling spindle. Since a speed probe is relatively likely to fail in operation before the remainder of the drilling spindle fails, it is frequently necessary to replace a speed probe as part of a maintenance of refurbishment programme. Therefore it is desirable if speed probes can be produced having dimensions which are the same as, or within those of existing speed probes so that a new speed probe can directly replace an existing one. Thus, it can be advantageous if a compact design of speed probe can be arrived at and any improvements in the performance of a speed probe must preferably not lead to an increased size in the probe to the extent that the probe is not compatible with existing drilling spindles.

EP 1 138 435 A describes a machining apparatus including a rotation transducer system which is arranged to measure the number of revolutions and/or angle of rotation of the shaft of the apparatus. The rotation transducer system makes use of a measuring gear wheel attached to the shaft and a magnetic field sensor with an associated magnet and electronics.

EP 1 156 249 A describes an arrangement including an angular position measuring device in which a magnetic sensor is disposed on the opposite side of a circuit board substrate to its control elements. A magnet associated with the sensor is moveable relative to the sensor and the control electronics.

According to one aspect of the present invention there is provided a machining spindle speed probe for sensing the speed of rotation of a machining spindle shaft, the speed probe comprising a permanent magnet which generates a magnetic field and a magneto resistive sensor disposed in the magnetic field and arranged for sensing changes in the magnetic field caused by rotation of a machining spindle shaft in the vicinity of the speed probe, wherein the speed probe further comprises an electronics module for receiving an output of the magneto resistive sensor, the magneto resistive sensor is mounted on one side of a circuit board substrate and the electronics module is mounted on an opposite side of the circuit board substrate, and the permanent magnet is mounted on the electronics module.

This arrangement can help to minimise the length of electrical connections between the sensor and the electronics module to help reduce the effects of electromagnetic interference.

The electronics module may comprise an amplifier for amplifying the output of the sensor. The amplifier may be a variable gain amplifier. This is particularly useful as it means that the gain of the amplifier may, for example, be adjusted to overcome differences in shaft to sensor spacing that occur from spindle to spindle due to assembly tolerances.

The electronics module may comprise an output buffer. The output buffer can serve to reduce the output impedance of the electronics module.

The permanent magnet may be bonded to the electronics module.

The sensor, circuit board substrate, and electronics module may be arranged as a sandwich, with the substrate sandwiched between the other components. The magnet may be arranged so as to form another layer of this sandwich.

The above collection of features may be used in combination or individually to help arrive at a compact design and/or in an effort to produce a device with desired sensing characteristics. It has been found that arranging the sensor as a sandwich or stack with the sensor, then the circuit board substrate, then the electronics module and then the magnet leads to the most effective performance whilst minimising the size of the probe as a whole. It will be seen that this arrangement maximizes the separation of the magnet and sensor within a given probe size.

Preferably at least the sensor and magnet are arranged in register with one another in the stack. The expression in register is used to mean the sensor and magnet overlapping one and other as much as geometrically possible in the plane generally perpendicular to the stacking direction.

The thickness of at least one of: the circuit board substrate, the electronics module, and the sensor may be chosen to provide a desired probe output characteristic. The thickness of the circuit board substrate may be in the range 0.6mm to 1mm and preferably 0.8mm. The thickness of the electronics module and/or the sensor may be in the range 1 to 1.5 mm and preferably 1.1mm.

The sensor may comprise two magneto resistive elements arranged to respond mutually oppositely to a change in magnetic field. The outputs of the two elements may be fed to the electronics module for processing. The electronics module may be arranged to produce the module output in dependence on the difference between the outputs of the two elements. The sensor may comprise at least one reference element against which changes in the values detected by the or each magneto-resistive element may be measured. There may be four elements arranged as a Wheatstone Bridge.

According to another aspect of the present invention there is provided a machining spindle comprising a motor for driving the shaft of the spindle, a speed probe, as defined above, for sensing the speed of rotation of the shaft, and a control unit for controlling driving of the shaft in dependence on an output of the speed probe.

In such a spindle the electronics module may comprise the control unit, but preferably the electronics module produces a module output in dependence on the sensor output and the module output is supplied to the control unit.

The spindle may comprise a main body in which the shaft is journalled. The main body may comprise at least one air bearing within which the shaft is journalled.

A permanent magnet which is distinct from the speed probe may be mounted in the spindle to provide a drag force against rotation of the shaft relative to the main body. Preferably, the magnetic drag magnet is mounted on the main body of the spindle. This is preferable to mounting the magnet on the shaft because because of the high rotational forces experienced by the shaft and anything that it carries during normal use.

Preferably the magnetic drag magnet is mounted in the main body so as to face a substantially axial surface of the shaft. An axial surface of a shaft is a surface which is substantially perpendicular to the axis of rotation of the shaft. Generally such surfaces will be flat as opposed to the curved radial surfaces of the shaft. Arranging the magnetic drag magnet so as to face a generally flat axial surface of the shaft is advantageous in that it avoids the necessity of using a specially shaped magnet to achieve close coupling between the magnet and the shaft.

The magnetic drag magnet may be provided in the region of or within an axial bearing of the spindle. The magnetic drag magnet may be mounted on a thrust plate of the spindle.

The provision of additional drag against relative rotation between the shaft and the remainder of the spindle is useful to overcome a phenomenon known as windmilling. Windmilling refers to the rotation of a shaft within a "very good", ie very low drag, air bearing when no drive is being applied to the shaft. This generally occurs because of minute imbalances in the air fed to the air bearing which in effect "blow" the shaft around when there is no external drive and little or no external load. This phenomenon can cause problems in some applications as some motor control systems will not function properly if the shaft is not stationary when "it should be". Some motor controllers will enter a fault condition mode in such circumstances which will prevent the controller from going into a start-up mode.

In some instances the presence of a speed probe or another source of drag will prevent windmilling occurring but in at least some embodiments of the present invention windmilling can be a problem and the provision of an additional magnet can provide a solution.

Embodiments of the present invention will now be described by way of example only with reference to the accompanying drawings in which:
Figure 1 schematically shows a prior art speed sensor;
Figure 2A schematically shows part of a drilling spindle embodying the present invention and including a shaft motor drive control arrangement;
Figure 2B schematically shows part of a notched thrust plate of the shaft of the drilling spindle shown in Figure 2A;
Figure 3 schematically shows a speed probe of the drilling spindle shown in Figure 2A;
Figure 4 shows details of the constructional layout of the speed probe of Figures 2A and 3;
Figures 5A to 5D show example signals which may be seen as an output of the speed probe shown in Figures 3 and 4;
Figure 6 schematically shows part of an alternative drilling spindle embodying the present invention and including a shaft motor drive control arrangement, which is similar to that shown in Figure 2A; and
Figure 7 schematically shows part of another alternative drilling spindle.

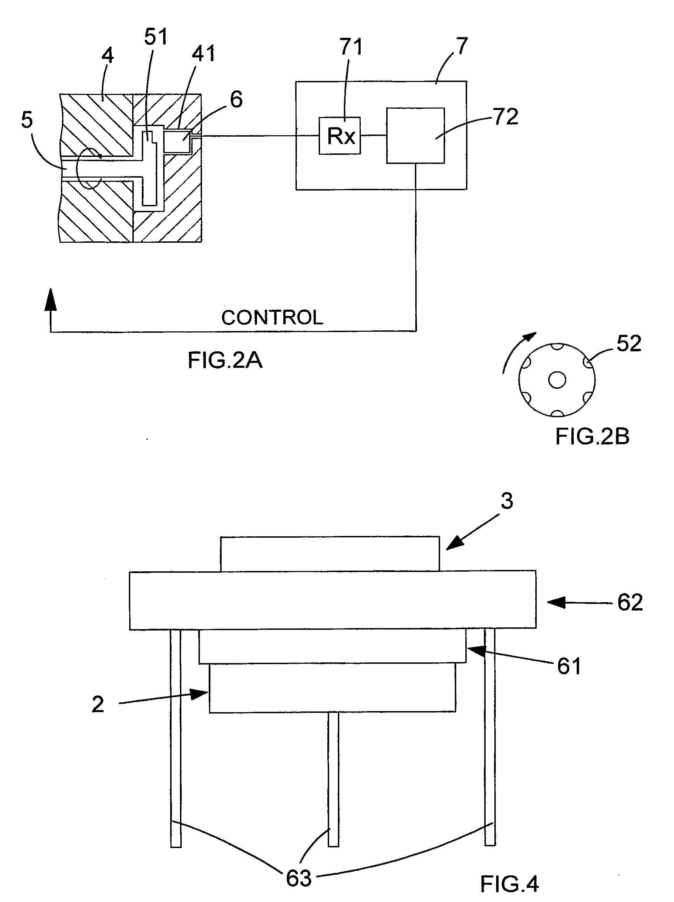

Figure 2A schematically shows part of a drilling spindle embodying the present invention. The drilling spindle comprises a spindle main body 4 within which is journalled a drilling spindle shaft 5. The shaft 5 is arranged to be rotatingly driven by a motor (not shown) relative to the spindle main body 4 and to carry a tool (not shown) for performing a drilling operation. The spindle main body 4 also houses a speed probe 6 in a speed probe receiving chamber 41.

An output of the speed probe 6 is connected to a drive control unit 7 which is arranged for controlling operation of the motor (not shown) so as to drive the shaft at the desired speed making use of the output of the speed probe 6. The drive control unit 7 comprises a speed probe receiver board 71 which has an input connected via a cable to the output of the speed probe 6 and which in turn is connected to a main controller unit 72.

The end of the drilling spindle shaft 5 comprises a notched thrust disc 51 which is more clearly shown from the end in Figure 2B. The thrust disc 51 runs in a thrust bearing provided in the main spindle body 4 to control axial movement of the shaft 5 relative to the spindle body 4 in a conventional way.

Again, as is conventional in these type of drilling spindles, the thrust disc 51 is provided with a plurality of notches (in this case six) 52 which are provided around the periphery of the thrust disc 51. These notches 52 are provided to facilitate the speed sensing operation of the speed probe 6. In alternatives notches or other features which are arranged to influence magnetic field to facilitate functioning of the speed probe may be provided directly on the end of a shaft rather than on a thrust disc

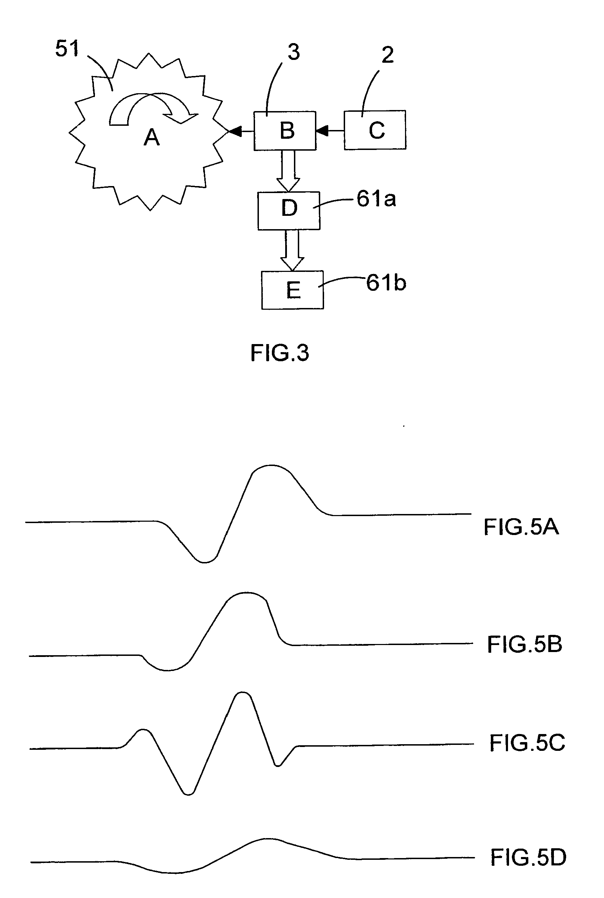

The speed probe 6 of the present embodiment operates in a similar way to the conventional speed probe described above in respect of Figure 1 but there are differences. The structure of the speed probe 6 from a conceptual point of view is schematically shown in Figure 3.

Again the speed probe 6 is used to sense the rotational speed of a rotating notched metallic part, in this case the notched thrust disc 51 of the shaft 5 as just described above. Again there is a permanent magnet 2 and a magneto resistive sensor 3 which is disposed in the field of the permanent magnet 2 and senses changes in the magnetic field caused by the rotation of the notched thrust disc 51. However, in this case an amplifier 61a and an output buffer 61b are provided and outputs of the magnetic resistive sensor 3 are fed into the amplifier 61a and onwards to the output buffer 61b. This arrangement allows the signals of the magneto resistive sensor 3 to be amplified and the use of an output buffer helps to reduce the output impedance of the probe 6.

The magneto resistive sensor 3 in the present embodiment comprises two magneto resistive sensing elements which are arranged so as to be mutually oppositely affected by changes in magnetic field. This means that as the magnetic field seen by the sensor changes due to rotation of the notched thrust disc 51, the magnetic resistive sensor 3 of the present embodiment produces two outputs which vary in an opposite sense. These sensing elements may be arranged with two reference elements in a Wheatstone Bridge arrangement.

Both of these outputs are fed to the amplifier 61 a which amplifies the difference between the two outputs of the magneto resistive sensor 3 to help reduce the affects of noise and improve the signal to noise ratio.

However, the inclusion of the amplifier 61a and output buffer 61b leads to its own problems if the objective is to produce a speed probe which may be used to replace existing speed probes having a predefined maximum dimension dictated by the size of the respective probe receiving chamber 41 and a predetermined required output characteristic predetermined by the receiver board 71 of existing drive control units 7.

These requirements can be met by careful selection of components of the speed probe 6 and a careful arrangement of these as is described in more detail below with reference to Figure 4.

Figure 4 schematically shows in more detail the physical structure of the speed probe 6 of the present embodiment. Here the various components of the speed probe 6 are arranged as a stack or a sandwich. At one end of the stack (the top of the stack as shown in the orientation of the device shown in Figure 4) is the magneto resistive sensor 3. Next in the stack is a circuit board substrate 62 on which the magneto resistive sensor 3 is mounted. On the opposite side of the circuit board substrate 62 is an electronics module 61 which comprises both the amplifier 61a and output buffer 61b. This electronics module is also mounted on the circuit board substrate 62. The final element of the stack of components in the present embodiment is the permanent magnet 2 which is bonded to the electronics module 61.

The speed probe also comprises a plurality of connecting wires (in this embodiment 3) which are used to connect the speed probe 6 to the receiver board 71 of the control unit 7. In the present embodiment a first of the wires is +5V, a second is 0V and the third is the V out connector which will carry the analogue pulse signals generated by the speed probe.

In the present embodiment the circuit board substrate 62 is a 0.8mm FR4 epoxy laminate circuit board substrate. This thickness of circuit board substrate is preferred as it has been found to give good results in terms of the desired probe output for speed probes which are intended to replicate the output of speed probes used in existing Westwind drilling spindles. Whilst the thickness of 0.8mm is particularly preferred, in other embodiments the thickness of the substrate may, for example be in the range of 0.6mm to 1.2mm. In the present embodiment the magneto resistive sensor 3 comprises a mini small outline packaged (MSOP) component which has a thickness of 1.1mm in the direction of the stack. Again, the electronics module 61 comprises a mini small outline packaged (MSOP) op-amp chip which has a thickness of 1.1mm in the stacking direction. It was found that using a component for the electronics module 61 having a thickness in the range of 1mm to 1.5mm gave an acceptable output. It should be noted, of course, that other package styles besides MSOP can be used in devices of the present type.

The magnet 2 is bonded to the electronics module chip 61 to make best use of the space available for the probe i.e. to minimise the size of the probe.

Arranging the components in the way described above and using components having the thicknesses described above leads to a compact probe having the desired output characteristics.

The provision of the magneto resistive sensor 3 and electronics module 61 back to back on either side of the printed circuit board substrate 62 leads to a compact design and also serves to minimise the electrical connection paths between the components. This helps reduce the pick up of electric magnetic interference on these connection wires which would otherwise distort the output of the probe as any such interference would be amplified by the amplifier 61 a and in some circumstances could serve to drown out the output of the magneto resistive sensor 3.

The positioning of the magnet 2 on the other side of the sandwich from the magneto resistive sensor 3 serves to give an appropriate separation between the magnet and the magneto resistive sensor to enable proper operation. Interchanging the positions of the magneto resistive sensor 3 and electronics module 61 would lead to a marked degradation in performance of the device. Other configurations that could be envisaged would serve to increase the size of the probe or tend to move the sensor 3 out of register with the magnet 2 which would again serve to degrade the output of the device.

In practice it has been found that the position of the tracks provided on the printed circuit board 62 and holes in the printed circuit board 62 required for connecting together all of the necessary electronic components can serve to affect the output of the probe. Thus in some circumstances the performance of the device may be improved by trying different track and hole arrangements in the substrate 62.

As alluded to above the speed probe receiver board 71 in existing drive control unit 7 for example those used in existing Westwind drilling spindles can demand input signals having specific characteristics in order to function correctly. In the case of receiver boards used in some existing Westwind devices the input signal may require a nominal 2.5V d.c. bias, require a signal pulse that goes negative first and then positive, require the pulse to have a minimum peak to peak amplitude of 500 mV, require the pulse to have a maximum peak to peak amplitude not exceeding 1000mV, and require a signal that is symmetrical about the d.c. offset voltage. Of course in other implementations different offset voltages and minimum and maximum acceptable amplitudes may be relevant.

Figure 5a schematically shows an acceptable probe output voltage, i.e. acceptable input to such an existing speed control unit 7. The configuration and dimensions shown in Figure 4 will help the achievement of such a pulse. The spacings between the thrust disc 51 of the shaft, the magneto resistive sensor 3 and the magnet can affect the signal. As can the strength of the magnet.

Given the constructional details of the present embodiment described above in relation to Figure 4 it is a relatively straightforward matter to determine an appropriate strength of magnet for a given installation.

If the magnet is too strong or too close to the magneto resistive sensor 3 the magneto resistive sensor 3 saturates and produces a signal of the kind illustrated in Figure 5C which has more than one positive edge and has a tendency to produce multiple false signals. Again, if the thrust disc 51 is too close to the magneto resistive sensor 3 another variant of the signal shown in Figure 5C is likely to be seen.

If the distances are too great then a weak signal of the type shown in Figure 5D will be obtained. While such a signal can be amplified this will lead to more amplified noise and also a system which is more heavily dependent on the precise spacing of the components.

If the magnet is mounted out of register with the MR sensor, i.e. off centre, or the notches do not pass directly under the magneto resistive sensor or the material between the magnet and the notch is not relatively uniform, or alternatively is ferrous, then an asymmetric signal of the kind illustrated in Figure 5B is seen.

The specific arrangement described in this application improves or alleviates many of these potential problems making it a much more manageable task to produce a working sensor for a wide range of different circumstances.

The amplifier 61a used in the present embodiment has variable gain and this may be used to adjust the output of the speed probe to a desirable level as required by differences in the notched disc/gear wheel to speed probe 6 spacing.

In the current Westwind drilling spindles the envelope within which the speed probe must fit is a 9mm diameter cylinder with a maximum depth of 6mm.

It will be noted that in the present embodiment the amplifier 61 a is very close the magneto resistive sensor, effectively the separation is only the thickness of the circuit board substrate 62.

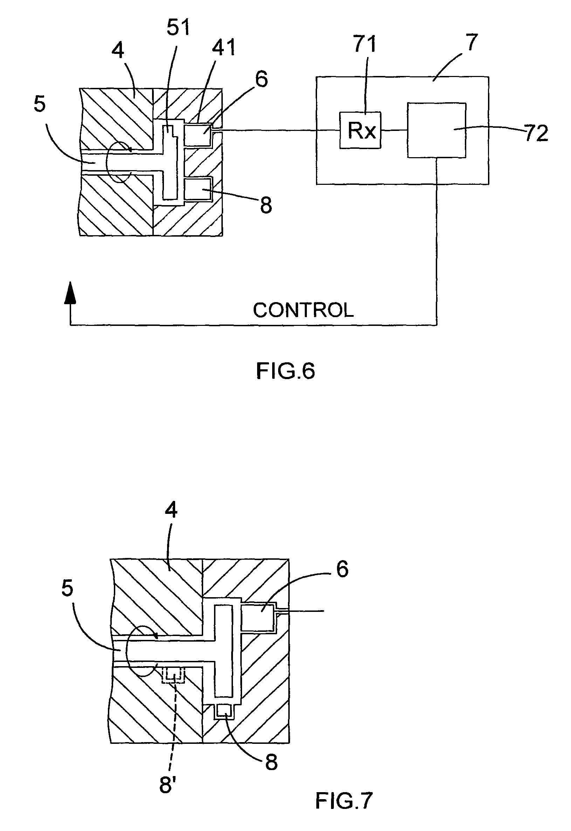

Figure 6 shows a drilling spindle that is similar to that shown in Figure 2A. The parts which correspond to those of the drilling spindle shown in Figure 2A have been given the same reference numerals and description of these common parts is omitted for the sake of brevity.

The difference between the drilling spindle shown in Figure 6 and that shown in Figure 2A is that an additional magnet 8 is provided in the main body 4 of the spindle. This additional magnet 8 acts as a magnetic drag magnet and provides a drag force against rotation of the shaft 5 relative to the main body 4.

The additional magnet 8 is a permanent magnet which is distinct from the speed probe 6. The additional magnet is mounted in the main body 4 so as to face a substantially axial surface of the shaft 5, in this case the thrust disc 51. Thus the additional magnet 8 is mounted on a thrust plate of the spindle and is in close proximity to the speed probe 6.

The provision of additional drag against relative rotation between the shaft 5 and the remainder of the spindle is useful to overcome the phenomenon knows as windmilling which is discussed in the introduction to this application. The size, strength and positioning of the additional magnet 8 may be chosen to give the desired amount of drag force depending on the particular implementation.

Figure 7 schematically shows part of another alternative drilling spindle. This is similar to that shown in Figure 6 although less of the spindle arrangement is shown. The parts which correspond to those of the drilling spindle shown in Figure 6 have been given the same reference numerals and description of these common parts is omitted for the sake of brevity.

Again in this case a magnet 8 is provided for providing magnetic drag on the shaft 5. However in the case of the spindle shown in Figure 7 the magnet 8 is provided so as to face a curved surface of the shaft 5, in particular in this embodiment it faces the curved surface of the thrust disc 51. Thus the magnet 8 in this case can be considered a radial magnet. The face of the magnet 8 facing the shaft 5 may be shaped to encourage magnetic coupling with the shaft 5, for example it may be concave and may have a curvature that corresponds to the curvature of the shaft 5.

A further alternative position for a magnetic drag magnet 8 is indicated in dotted lines in Figure 7, the magnet being given the reference numeral 8'. Here the magnet 8' is again a radial magnet but in this case it faces the curved surface of a main part of the shaft 5, ie a part away from the axial bearing. Again the surface of the magnet 8' facing the shaft 5 may be shaped as described above.

## Claims

1. A machining spindle speed probe (6) for sensing the speed of rotation of a machining spindle shaft (5), the speed probe comprising a permanent magnet (2) which generates a magnetic field and a magneto resistive sensor (3) disposed in the magnetic field and arranged for sensing changes in the magnetic field caused by rotation of a machining spindle shaft (5) in the vicinity of the speed probe (6), wherein the speed probe (6) further comprises an electronics module (61) for receiving an output of the magneto resistive sensor (3), the magneto resistive sensor (3) is mounted on one side of a circuit board substrate (62) and the electronics module (61) is mounted on an opposite side of the circuit board substrate (62), and the permanent magnet (2) is mounted on the electronics module (61).

2. A machining spindle speed probe according to claim 1 in which the sensor (3), circuit board substrate (62), and electronics module (61) are arranged as a sandwich, with the substrate sandwiched between the other components.

3. A machining spindle speed probe according to claim 2 in which the magnet (2) is arranged so as to form another layer of this sandwich.

4. A machining spindle speed probe according to claim 3 in which at least the sensor (3) and magnet (2) are arranged in register with one another in the sandwich.

5. A machining spindle speed probe according to any preceding claim in which the thickness of at least one of: the circuit board substrate (62), the electronics module (61), and the sensor (3) is chosen to provide a desired probe output characteristic.

6. A machining spindle speed probe according to any preceding claim in which the sensor (3) comprises two magneto resistive elements arranged to respond mutually oppositely to a change in magnetic field.

7. A machining spindle comprising a motor for driving the shaft of the spindle, a speed probe (6) according to any one of claims 1 to 6 for sensing the speed of rotation of the shaft, and a control unit (7) for controlling driving of the shaft in dependence on an output of the speed probe (6).

8. A machining spindle according to claim 7 in which the spindle comprises a main body (4) in which the shaft (5) is journalled and a permanent magnet (8,8') which is distinct from the speed probe (6) is mounted in the spindle to provide a drag force against rotation of the shaft (5) relative to the main body (4).

9. A machining spindle according to claim 8 in which the magnetic drag magnet (8,8') is mounted on the main body (4) of the spindle.

10. A machining spindle according to claim 8 or claim 9 in which the magnetic drag magnet (8,8') is mounted in the main body (4) so as to face a surface of a shaft which is substantially perpendicular to the axis of rotation of the shaft (5).

11. A machining spindle according to any of claims 8 to 10 in which the magnetic drag magnet (8,8') is provided in the region of or within an axial bearing of the spindle.

12. A machining spindle according to any one of claims 7 to 11 in which the main body (4) comprises at least one air bearing within which the shaft is journalled.

13. A machining spindle speed probe according to any one of claims 1 to 6 wherein the electronics module (61) comprises a variable gain amplifier for amplifying the output of the sensor (3).

14. A machining spindle speed probe according to any one of claims 1 to 6 and 13, wherein the electronics module (61) comprises an output buffer.

15. A machining spindle according to anyone of claims 7 to 12, which is a drilling spindle.

## Patentansprüche

1. Geschwindigkeitsmessaufnehmer (6) für eine Bearbeitungsspindel zum Ermitteln der Drehzahl einer Bearbeitungsspindelwelle (5), wobei der Geschwindigkeitsmessaufnehmer einen ein Magnetfeld erzeugenden Dauermagneten (2) und einen magnetorestriktiven Sensor (3) umfasst, welcher in dem Magnetfeld angeordnet und so ausgerichtet ist, dass er durch eine Drehung einer Bearbeitungsspindelwelle (5) in der Nähe des Geschwindigkeitsmessaufnehmers (6) hervorgerufene Veränderungen im Magnetfeld erfasst, wobei der Geschwindigkeitsmessaufnehmer (6) zudem ein Elektronikmodul (61) zum Empfang einer Ausgabe des magnetorestriktiven Sensors (3) enthält, der magnetorestriktive Sensor (3) an einer Seite des Platinensubstrats (62) gehaltert ist und das Elektronikmodul (61) an einer entgegengesetzten Seite des Platinensubstrats (62) gehaltert ist, wobei der Dauermagnet (2) an dem Elektronikmodul (61) gehaltert ist.

2. Geschwindigkeitsmessaufnehmer für eine Bearbeitungsspindel nach Anspruch 1, wobei der Sensor (3), das Platinensubstrat (62) und das Elektronikmodul (61) schichtartig angeordnet sind, wobei das Substrat zwischen den anderen Bestandteilen liegt.

3. Geschwindigkeitsmessaufnehmer für eine Bearbeitungsspindel nach Anspruch 2, wobei der Magnet (2) so angeordnet ist, dass er eine weitere Schicht dieser Schichtanordnung bildet.

4. Geschwindigkeitsmessaufnehmer für eine Bearbeitungsspindel nach Anspruch 3, wobei wenigstens der Sensor (3) und der Magnet (2) innerhalb der Schichtanordnung so angeordnet sind, dass sie miteinander fluchten.

5. Geschwindigkeitsmessaufnehmer für eine Bearbeitungsspindel nach einem der vorhergehenden Ansprüche, wobei die Dicke des Platinensubstrats (62) und/oder des Elektronikmoduls (61) und/oder des Sensors (3) so gewählt wird, dass die Ausgabe des Gebers eine gewünschte Eigenschaft annimmt.

6. Geschwindigkeitsmessaufnehmer für eine Bearbeitungsspindel nach einem der vorhergehenden Ansprüche, wobei der Sensor (3) zwei magnetorestriktive Elemente umfasst, die so angeordnet sind, dass sie auf eine Veränderung im Magnetfeld jeweils gegensätzlich reagieren.

7. Bearbeitungsspindel, umfassend einen Motor zum Antrieb der Welle der Spindel, einen Geschwindigkeitsmessaufnehmer (6) nach einem der Ansprüche 1 bis 6 zum Erkennen der Drehzahl der Welle und eine Steuereinheit (7) zur Steuerung des Antriebs der Welle in Abhängigkeit von einer Ausgabe des Geschwindigkeitsmessaufnehmers (6).

8. Bearbeitungsspindel nach Anspruch 7, wobei die Spindel einen Hauptkörper (4) umfasst, in dem die Welle (5) gelagert ist, und einen Dauermagneten (8, 8'), der von dem Geschwindigkeitsmessaufnehmer (6) getrennt in der Spindel gehaltert ist und dazu dient, eine Zugkraft gegen die Drehung der Welle (5) relativ zum Hauptkörper (4) auszuüben.

9. Bearbeitungsspindel nach Anspruch 8, wobei der magnetische Zugmagnet (8, 8') am Hauptkörper (4) der Spindel gehaltert ist.

10. Bearbeitungsspindel nach Anspruch 8 oder 9, wobei der magnetische Zugmagnet (8, 8') am Hauptkörper (4) derart gehaltert ist, dass er einer Oberfläche der Welle zugewandt ist, welche im wesentlichen senkrecht zur Drehachse der Welle (5) verläuft.

11. Bearbeitungsspindel nach einem der Ansprüche 8 bis 10, wobei der magnetische Zugmagnet (8, 8') im Bereich eines Axiallagers oder innerhalb eines Axiallagers der Spindel vorgesehen ist.

12. Bearbeitungsspindel nach einem der Ansprüche 7 bis 11, wobei der Hauptkörper (4) wenigstens ein Luftlager umfasst, in dem die Welle gelagert ist.

13. Geschwindigkeitsmessaufnehmer für eine Bearbeitungsspindel nach einem der Ansprüche 1 bis 6, wobei das Elektronikmodul (61) einen Verstärker mit variabler Verstärkung zum Verstärken der Ausgabe des Sensors (3) umfasst.

14. Geschwindigkeitsmessaufnehmer für eine Bearbeitungsspindel nach einem der Ansprüche 1 bis 6 und 13, wobei das Elektronikmodul (61) einen Ausgabepuffer umfasst.

15. Bearbeitungsspindel nach einem der Ansprüche 7 bis 12, wobei es sich um eine Bohrspindel handelt.

## Revendications

1. Sonde de vitesse de broche d'usinage (6) pour détecter la vitesse de rotation d'un arbre de broche d'usinage (5), la sonde de vitesse comprenant un aimant permanent (2), qui génère un champ magnétique et un capteur magnétorésistif (3) disposé dans le champ magnétique et disposé pour capter des changements dans le champ magnétique provoqué'par rotation d'un arbre de broche d'usinage (5) à proximité de la sonde de vitesse (6), la sonde de vitesse (6) comprenant en outre un module 'électronique 61) pour recevoir une sortie du capteur magnétorésistif (3), le capteur magnétorésistif (3) est monté sur une face d'un substrat de carte de circuit (62) et le module électronique (60) est monté sur une face opposée du substrat de carte de circuit (62) et l'aimant permanent (2) est monté sur le module électronique (61).

2. Sonde de vitesse de broche d'usinage selon la revendication 1, dans lequel le capteur (3), le substrat de carte de circuit (62), et le module électronique (61) sont disposés en sandwich avec le substrat intercalé entre les autres composants.

3. Sonde de vitesse de broche d'usinage selon la revendissions 2 dans laquelle l'aimant (2) est disposé de manière á former une autre couche de ce sandwich.

4. Sonde de vitesse de broche d'usinage selon la revendication 3 dans laquelle au moins le capteur (3) et l'aimant (2) sont disposés en registre entre eux dans le sandwich.

5. Sonde de vitesse de broche d'usinage selon l'une des revendications précédentes dans lesquelles l'épaisseur d'au moins l'un des substrat de carte de circuit (62), du module électronique (61) et du capteur (3) est choisie pour fournir une caractéristique de sortie de sonde souhaitée.

6. Sonde de vitesse de broche d'usinage selon l'une des revendications précédentes dans lequel le capteur (3) comprend deux éléments magnétorésistifs disposés pour répondre en opposition mutuelle à un changement dans le champ magnétique.

7. Broche d'usinage comprenant un moteur pour entrainer l'arbre de la broche, une sonde de vitesse (6) selon l'une des revendications 1 à 6 pour détecter la vitesse de rotation de l'arbre, et une unité de commande (7) pour commander l'entrainement de l'arbre en fonction d'une sortie de la sonde de vitesse (6).

8. Broche d'usinage selon la revendication 7, ns laquelle la broche comprend un corps principal (4) dans lequel st logée la sonde de vitesse et un aimant permanent (8 ; 8') qui est distinct de la sonde de vitesse (6) qui est montée dans la broche pour fournir une force d'attraction à l'encontre de la rotation de l'arbre (5) par rapport au corps principal (4).

9. Boche d'usinage selon la revendication 8 dans laquelle l'aimant d'attraction magnétique (8, 8') est monté sur le corps principal (4) de la broche.

10. Broche d'usinage selon la revendication 8 ou la revendication 9 dans laquelle l'aimant d'attraction magnétique (8, 8') est monté dans le corps principal (4) de manière à faire face à une surface d'une broche qui est essentiellement perpendiculaire à l'axe de rotation de la broche (5).

11. Broche d'usinage selon l'une des revendications 8 à 10, dans laquelle un aimant d'attraction magnétique (8, 8') est prévu dans la région ou à l'intérieur d'un palier axial de la broche.

12. Broche magnétique selon l'une des revendications 7 á 11, dans laquelle le corps principal (4) comprend au moins un palier á air à l'intérieur duquel est logé l'arbre.

13. Sonde de vitesse de broche d'usinage selon l'une des revendications 1 à 6, dans lequel le module électronique (61) comprend un amplificateur à gain variable pour amplifier la sortie du capteur (3).

14. Sonde de vitesse de broche d'usinage selon l'une des revendications 1 à 6 et 13, dans laquelle le module électronique (61) comprend un tampon de sortie.

15. Broche d'usinage selon l'une des revendications 7 à 12 qui est une broche de perçage.
